# EUROPEAN PATENT APPLICATION

(11) **EP 4 645 922 A1**
(43) Date of publication of application: **05.11.2025**
(21) Application number: 25154561.2
(22) Date of filing: 28.01.2025
(51) Int. Cl.: H04W 12/00, H04W 12/08, H04W 12/79, H04W 48/16

(54) **RADIO FREQUENCY NETWORK AND METHODS FOR MANAGING NODES**

(30) Priority: 29.04.2024 US 202418649104
(71) Applicant: Rockwell Collins, Inc., Cedar Rapids, IA 52498 (US)
(72) Inventor: HOWARD, Sean D., Cedar Rapids, 52402 (US); DRAHOS, Jonathan D., Belle Plaine, 52208 (US); ANDERSON, Meghan K., Elkhorn, 68022 (US)
(74) Representative: Dehns

(57) **Abstract**

A radio frequency (RF) network (100) includes a plurality of nodes (104, 106) communicating using RF signals. A base station (102) serves as network infrastructure to manage the nodes. The base station (102) is connected to a database (110) storing information on accepted nodes within the RF network (100). A new node (108) is detected. A unique identifier (502) and a timing pattern (401) are sensed and determined for the new node (108). These parameters are searched within the database (110) along with provided identification and credentials (504) for the new node (108). Depending on the results of the search within the database (110), the new node (108) is allowed or rejected from joining the RF network (100).

## Description

### Technical Field

The present application relates to methods used within a radio frequency network for sensing and allowing foreign or unfamiliar nodes to access the network. More particularly, the methods used within the radio frequency network use intelligent sensing heuristics to determine whether to allow access to the network for an unfamiliar node.

### Background

Unprotected and promiscuous radio frequency (RF) networks allow for unauthenticated users to actively join and interact with a given network despite additional security protocols. This linkage and interaction may impact the RF network, even if limited to being linked at a physical layer and not the network layer. For example, an unintended consequence is taking up slots on a time-division multiple access (TDMA) network that allows several users to share the same frequency channel. Unauthenticated users can reduce efficiency and throughput. Further, unauthorized access can allow the user to gain a foothold into the RF network that is exploited for greater access. RF networks also can bleed into each other and accidentally sharing information that should not have occurred due to proximity. This issue may arise in air combat maneuvering instrumentation (ACMI) systems that are adjacent but not sharing access yet configured for promiscuous operation.

A need appears to have arisen to better manage access to RF networks to allow user, or nodes, into an RF network at the network infrastructure.

### Summary

A method for determining whether to add a new node to a radio frequency (RF) network is disclosed. The method includes detecting a new node on the RF network. The new node transmits over a radio frequency. The method also includes measuring data points of a signal from the new node over a link corresponding to the radio frequency to a network infrastructure. The method also includes determining a unique identifier for the new node based on the measured data points. The method also includes determining a timing pattern for the new node on the link. The timing pattern is based on received information from a device at the new node. The method also includes searching a database of node credentials for the unique identifier and the timing pattern. The database is connected to the RF network. The method also includes determining whether to allow the new node on the RF network according to a result of searching the unique identifier in the database.

In embodiments, the method may comprise receiving an identification or a credential for the new node at the RF network; and matching the unique identifier, such as a fingerprint, with the identification or the credential.

In embodiments, the method may comprise checking the database for the identification or the credential to determine whether to accept the new node.

In embodiments, determining whether to allow the new node may include not allowing the new node if the unique identifier, such as a fingerprint, does not match an entry in the database.

In embodiments, determining whether to allow the new node may include not allowing the new node if the identification or the credential for the unique identifier, such as the fingerprint, does not match an allowed identification or an allowed credential of the unique identifier, such as the fingerprint, in the database.

In embodiments, determining whether to allow the new node may include allowing the new node if the unique identifier, such as a fingerprint, is within the database.

In embodiments, determining whether to allow the new node includes not allowing the new node based on the unique identifier, such as a fingerprint.

In embodiments, the method may comprise instructing at least one node connected to the RF network to reconnect to the RF network at a new frequency.

In embodiments, the method may comprise blocking the new node from the RF network by not adding the unique identifier of the new node to the database.

In embodiments, the data points of the signal may include at least one of a transmission frequency, a spur within the signal, a harmonic component within the signal, and a noise floor for the signal.

In embodiments, the timing pattern may include at least one of a transmission speed, a transmission frequency, and a variability of transmission.

In embodiments, the variability of transmission may be caused by the device at the new node.

A method for managing nodes connected to a radio frequency (RF) network is disclosed. The method includes detecting a new node on the RF network. The new node transmits over a radio frequency within the RF network. The method also includes measuring elements of a signal from the new node over the link. The method also includes determining a unique identifier for the new node based on the measured elements. The method also includes determining a timing pattern for the new node on the link. The timing pattern is based on received information from the new node. The method also includes receiving an identification for the new node over the link. The method also includes searching a database of node credentials for the unique identifier and the timing pattern. The database is connected to the RF network. The method also includes determining whether the unique identifier and the timing pattern matches an entry for a node within the database. The method also includes comparing the identification to the entry for the node matching the unique identifier and the timing pattern. The method also include determining whether to allow the new node onto the RF network based on the comparison.

In embodiments, determining whether to allow the new node may include not allowing the new node if the identification does not match the entry for the node matching the unique identifier, such as a fingerprint.

In embodiments, the elements of the signal may include at least one of a transmission frequency, a spur within the signal, a harmonic component within the signal, and a noise floor for the signal.

In embodiments, the timing pattern may include at least one of a transmission speed, a transmission frequency, and a variability of transmission.

In embodiments, determining whether to allow the new node may include not allowing the new node based on the unique identifier, such as a fingerprint.

In embodiments, the method may comprise instructing at least one node connected to the RF network to reconnect to the RF network at a new frequency.

A radio frequency (RF) network is disclosed. The RF network includes a plurality of nodes transmitting signals within the network. The RF network also includes a network infrastructure connected to the plurality of nodes. The network infrastructure includes at least one processor connected to a memory storing instructions thereon. The RF network also includes a database to store identifications for the plurality of nodes. The instructions stored within the memory are executed on the at least one processor to configure the network infrastructure to detect a new node on the RF network. The new node transmits over a radio frequency within the RF network. The network infrastructure is further configured to measure elements of a signal from the new node over a link corresponding to the radio frequency. The network infrastructure is further configured to determine a unique identifier for the new node based on the measured elements. The network infrastructure is further configured to determine a timing pattern for the new node on the link. The timing pattern is based on received information from the new node. The network infrastructure is further configured to search the database for the unique identifier and the timing pattern. The network infrastructure is further configured to determine whether to allow the new node on the RF network according to a result of searching the unique identifier and the timing pattern in the database.

In embodiments, the instructions may configure the network infrastructure to receive an identification for the new node at the RF network; match the unique identifier with the identification or the credential; and check the database for the identification to determine whether to accept the new node.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, numerous variations are possible. For instance, structural elements and process steps may be rearranged, combined, distributed, eliminated, or otherwise changed, while remaining with the scope of the disclosed embodiments.

### Brief Description of the Drawings

Implementations of the inventive concepts disclosed herein may be better understood when consideration is given to the following detailed description thereof. Such description refers to the included drawings, which are not necessarily to scale, and which some features may be exaggerated and some features may be omitted or may be represented schematically in the interest of clarity. Like reference numerals in the drawings may represent and refer to the same or similar element, feature, or function. In the drawings:
Figure 1 illustrates a block diagram of an RF network having a plurality of nodes according to the disclosed embodiments.
Figure 2 illustrates a schematic diagram of a base station according to the disclosed embodiments.
Figure 3 illustrates a graph of a received RF signal showing elements according to the disclosed embodiments.
Figure 4 illustrates a flow diagram of a timing pattern related to signal processing by a new node according to the disclosed embodiments.
Figure 5 illustrates a block diagram showing access to a database for searching using sensed and received parameters from a received signal according to the disclosed embodiments.
Figure 6 illustrates a flowchart for managing nodes within the RF network according to the disclosed embodiments.
Figure 7 illustrates a flowchart for rejecting a new node from the RF network according to the disclosed embodiments.

### Detailed Description of the Preferred Embodiments

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

As used herein, a letter following a reference numeral is intended to reference an embodiment of the feature or element that may be similar, but not necessarily identical, to a previously described element or feature bearing the same reference numeral, such as 1, 1a, or 1b. Such shorthand notations are used for purposes of convenience only, and should not be construed to limit the inventive concepts disclosed herein in any way unless expressly stated to the contrary.

Moreover, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes plural unless it is obvious that it is meant otherwise. It will be further understood that the terms "comprises" or "comprising," when used in this specification, specify the presence of stated features, integers, steps, operations, elements, or components, but do not preclude the presence or addition of one or more other features, integers, steps, operations, elements, components, and/or groups thereof.

As used herein, any reference to "one embodiment," "alternative embodiments," or "some embodiments" means that particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination or sub-combination of two or more such features, along with any other features that may not necessarily be expressly described or inherently present in the instant disclosure.

The inventive concepts may be described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts, or combinations of special purpose hardware and computer instructions.

Inventive concepts may be implemented as a computer process, a computing system or as an article of manufacture such as a computer program product of computer readable media. The computer program product may be a computer storage medium readable by a computer system and encoding computer program instructions for executing a computer process. When accessed, the instructions cause a processor to enable other components to perform the functions disclosed below.

The disclosed embodiments implement a process composed of detection, calculation, and reaction. Detection involves the use several sensing techniques to determine a unique identifier, such as a "voice" or "fingerprint" of a given node on an RF network. For RF datalink "voicing" or "fingerprinting," the disclosed embodiments measure the transmission frequency, spurs, harmonics, and noise floor of the datalink. These elements provide a unique register based upon hardware components that comprise the circuit and the tuning of the equipment of the node.

Detection also includes the use of timing between the node and a receiver. Some datalinks as well as systems connected to a datalink may process messages faster or slower depending upon software load and hardware components. This aspect may relate to the generation of the equipment that is being spoken to, without asking the equipment for its information.

Detection also may include provided identification or credentials. These features are the information that a new participant may pass to the RF network to claim that the participant is who it says it is. This information, however, may not be trusted and should be paired with the aforementioned features. In some embodiments, the identification or credential already may be blacklisted as a known exile from the RF network. Thus, this feature would be useful for detection of some playback attacks.

The disclosed embodiments also include calculation, which involves the assessment of the detection methods, a calculation, and a search within a database of previous exchanges from bona fide nodes, including unique identifiers and timing. If the unique identifier was detected previously with the same timing with different bona fides then it is possible that the same hardware or software has been reprogrammed for a different user identification. This status may be acceptable based upon RF network admittance criteria.

If the unique identifier was detected previously with a different timing, then, regardless of bona fides, this datalink may have been paired with a different backend system. This change may be a result of some maintenance activity or upgrade. This status may be flagged as a notification or alert that this user is experiencing anomalous activity. If the unique identifier has never been detected before by the RF network and the range has not added any new acceptable players, then the new node may be an unwanted user and should be added to the blacklist.

The disclosed embodiments also include reaction, which involves the acceptance, rejection, or persistent and unified RF network response to the new node. Reaction includes acceptance such that the new entity is added to the network and may commence transmitting and receiving. Reaction also includes a simple rejection. The network management infrastructure does not add or broadcast the new entity and informs the entity that it is not authorized to communicate within the RF network.

Reaction also includes a persistent rejection. The network management infrastructure capable of adding new entities informs all other RF entities to hop to a new frequency so as to further disassociate from the possible accidental jamming of the unwanted participant. Further, the network management infrastructure also may inform all participants to openly block the denied entity on any future ad-hoc networks.

The disclosed embodiments prevent unwanted nodes or adversaries getting a foothold in secure RF networks. They also may provide stability in congested RF networks by reducing the number of participants. The number of unauthenticated users may be reduced to help increase transmission times for all accepted nodes. The disclosed embodiments also reduces the amount of accidental jamming, which occurs by having multiple nodes attempt to transmit at the same time. A reduced number of nodes results in less transmission attempts.

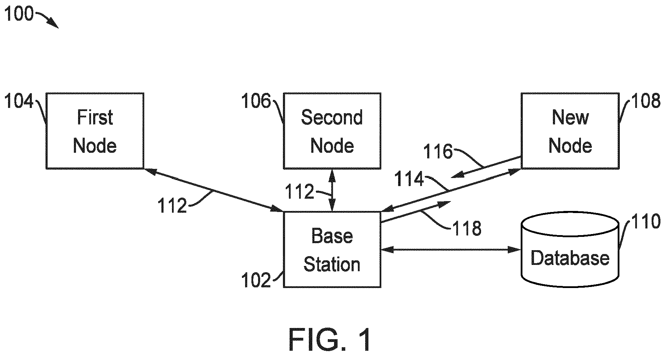

Figure 1 depicts a block diagram of a RF network 100 having a plurality of nodes according to the disclosed embodiments. RF network 100 may be an unprotected network of nodes, or user equipment, that communicate with each other and to a base station 102. RF network 100 may add nodes as they join the network. Nodes may be detected within RF network 100, for example, by base station 102. Nodes include first node 104 and second node 106. Nodes 104 and 106 are authenticated to access RF network 100. New node 108 may be seeking admittance onto RF network 100. Additional nodes may be allowed onto RF network 100 but not shown for brevity.

Nodes 104 and 106 and base station 102 as well as new node 108 may be positioned at a particular virtual location within RF network 100 as well as positioned at a physical location defined by a particular longitude, latitude, or elevation. RF network 102 may provide resources, such as computing resources or networking resources, to nodes 104 and 106. Nodes 104 and 106 may communicate with base station using links 112 to exchange data in the form of radio frequency signals. Links 112 may correspond to a particular frequency being used within RF network 100.

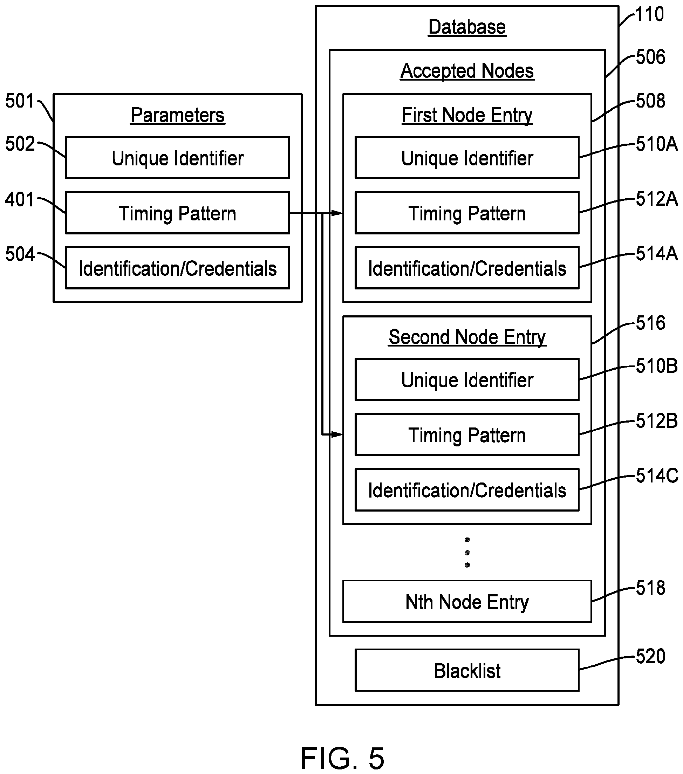

New node 108 may send a request for access to RF network 100. New node 108 may send the request using a signal 116 to base station 102. Base station 102 interacts with database 110 to determine whether to allow new node 108 onto RF network 100. An example database 110 is disclosed below in Figure 5. Base station 102 may provide one or more communication transmission signals 118 to facilitate communication with new node 108 using new link 114. New node 108 responds to signal 118 from base station 102 with one or more signals 116.

Network infrastructure, as embodied by base station 102, performs operations to determine whether to allow new node 102 onto RF network 100. Specifically, base station 102 determines a unique identifier based on data points of elements within signal 116. It also determines a timing pattern for new node 108 based on signal 116. Database 110 is searched to identify any entries within the database that match the unique identifier or the timing pattern. Based on the search results, RF network 100 decides whether to allow new node 108 to access the network.

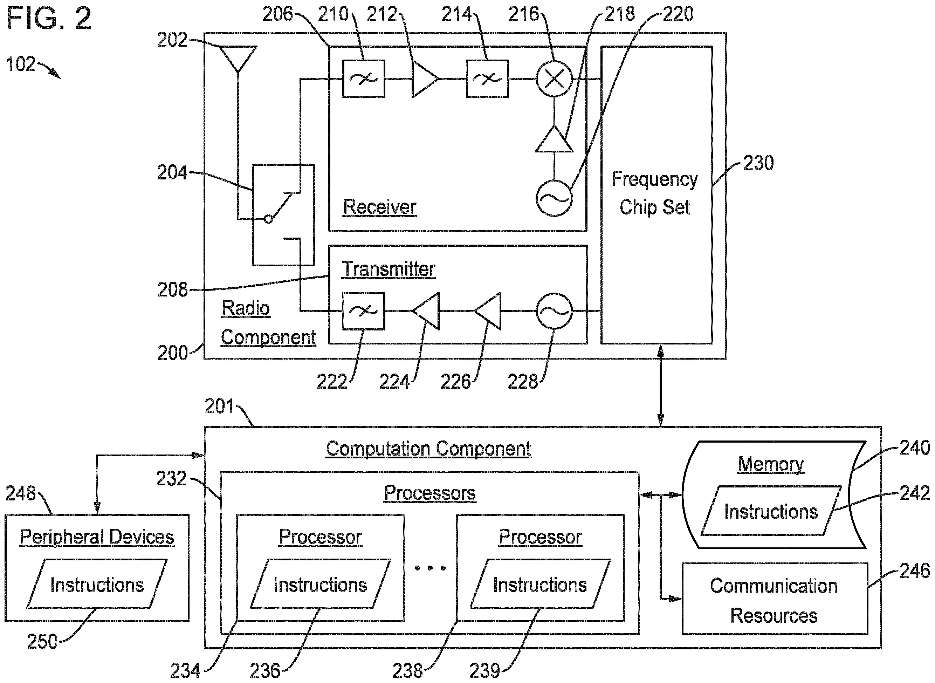

Figure 2 depicts a schematic diagram of a base station 102 according to the disclosed embodiments. Figure 2 also may depict a schematic diagram of new node 108 or nodes 104 and 106. Each node may include radio component 200 having the features disclosed below. Base station 102 may include computation component 201, which also acts as part of the network infrastructure for RF network 100. Nodes 104, 106, and 108 also may include one or more features of computation component 201. For the disclosure of Figure 2, reference will be made to base station 102.

Radio component 200 may send and receive RF signals within RF network 100. An RF signal refers to a wireless electromagnetic signal used as a form of communication. The RF signal may be a form of electromagnetic radiation with identified radio frequencies that range from 3 kHz to 300 GHz. Frequency refers to the rate of oscillation of the radio waves of the RF signals.

Radio component 200 includes antenna 202, single pole double throw (SPDT) switch 204, receiver 206, transmitter 208, and frequency chip set 230. Antenna 202 may transmit and receive RF signals within RF network 100. Antenna 202 converts electrical signals into electromagnetic waves. Antenna 202 may be one of a variety of types of antennas, such as dipole, monopole, Yagi-Uda, parabolic, and patch antennas. Antenna 202 may transmit and receive at certain frequencies as specified by base station 102.

SPDT switch 204 is an electrical switch that may include three terminals to connect antenna 202 to receiver 206 or transmitter 208. Antenna 202 may be connected to a common terminal of SPDT switch 204 while the two throw terminals are connected to receiver 206 and transmitter 208. Antenna 202 may be toggled between receiver 206 and transmitter 208 using SPDT switch 204. As shown in Figure 2, SPDT switch 204 may be connecting receiver 206 to antenna 202.

Frequency chip set 230 may be a set of integrated circuits that operate at specified frequencies or in a range of frequencies. Frequency chip set 230 may be a low frequency chip set that operates at frequencies ranging from a few kilohertz (kHz) to a few megahertz (MHz). Low frequency chip sets may be used in radio frequency identification (RFID) systems, short-range communications, and low-power devices. Frequency chip set 230 also may be a mid-frequency chip set that operates at frequencies ranging from a few MHz to a few hundred MHz. Mid-frequency chip sets may be used in various wireless communication systems, automotive electronics, and industrial automation.

Frequency chip set 230 also may be a high frequency chip set that operates at frequencies ranging from a few hundred MHz to several gigahertz (GHz). High frequency chip sets may be used in Wi-Fi, Bluetooth^{™}, cellular communications, satellite communications, and radar systems. Frequency chip sets having different frequency ranges not provided above also may be used in radio component 200. Specialized or customized chip sets also may be used. For example, an RFID chip set may be used specifically for RFID networks. Depending on the type of RFID network, these chip sets operate at different frequency bands. A custom frequency chip set may be used to operate at frequencies tailored for specific applications or requirements. These applications or requirements may include specialized communication protocols, proprietary systems, and the like.

Frequency chip set 230 may generate signals at desired frequencies. It also may perform modulation on the generated signals to carry information. Modulation techniques include amplitude modulation (AM), frequency modulation (FM), and phase modulation (PM). Frequency chip set 230 also may provide signal processing operations. Frequency chip set 230 also manages the transmission and reception of RF signals according to a communication protocol. These tasks may include generating RF signals for transmission using transmitter 208, receiving RF signals from antenna 202 using receiver 206, and conversion of these signals into data. Frequency chip set 230 also may include control logic and interfaces for configuring its operation, adjusting parameters using computation component 201, and interfacing with other components or systems.

Referring to receiver 206, this part of radio component 200 includes filter 210, low noise amplifier (LNA) 212, filter 214, mixer 216, buffer 218, and voltage-controller oscillator (VCO) 220. Filters 210 and 214 may be RF filters that select or reject specific frequencies within the received RF signal. LNA 212 may amplify weak signals from filter 210 and increase the magnitude of these signals while maintaining a low level of added noise. LNA 212 increases the strength of the received RF signal. The received RF signal may be passed through filter 214 to mixer 216.

Mixer 216 may convert received RF signal to a lower frequency range suitable for further processing by frequency chip set 230, if desired. Mixer 216 mixes the received RF signal from filter 214 with a signal from VCO 220, via buffer 218. VCO 220 may generate a local oscillator (LO) signal operating at a frequency slightly different than the received RF signal. Mixer 216 may operate in a nonlinear fashion by multiplying the received RF signal with the LO signal from buffer 218 and VCO 220. Mixer 216 may produce output signals at multiple frequencies. The multiple frequencies may include the sum of the received RF signal and the LO signal, the difference between the received RF signal and the LO signal, or harmonic frequencies of the RF and LO signals.

Transmitter 208 also is part of radio component 200. Transmitter 208 may receive an input signal from frequency chip set 230 to VCO 228. The input signal may be a voltage input to control the oscillation frequency of transmitter 208. VCO 228 is an oscillator circuit that generates a periodic waveform, such as a sine wave. The frequency of oscillation may be controlled by applying a control or tuning voltage.

The generated RF signal from VCO 228 is provided to driver 226, which may condition the signal to operate transmitter 208 and antenna 202. The generated RF signal is then provided to power amplifier 224, which amplifies the signal through filter 222. The generated RF signal transmits from radio component 200 using SPDT switch 204 and antenna 202.

These features of radio component 200 may differ depending on the application of base station 102. Further, they may differ for implementation within nodes 104, 106, or 108. Depending on the functionality desired by base station 102 and RF network 100, radio component 200 may operate differently than disclosed above. For example, additional filters or amplifiers may be included within receiver 206 or transmitter 208. The example features are disclosed for their impact on a voice or fingerprint that may be defined from signals transmitted from a radio component 200.

Base station 102 also may include computation component 201. Computation component 201 may be part of the network infrastructure that manages the access of nodes within RF network 100. Computation component 201 may interact with frequency chip set 230 to receive processed signals from receiver 206 or to transmit signals through transmitter 208. Further, computation component 201 may include applications that use signals to derive information within RF network 100.

Computational component 201 may be able to read instructions for a machine-readable or computer-readable medium and perform one or more of the functions disclosed herein. Computational component 201 includes one or more processors 232, one or more memory, or storage, devices 240, and one or more communication resources 246. These features may be communicatively coupled via a bus 244.

Processors 232 may include a processor 234 and a processor 238. The term processor also may refer to a processor core within computational component 201. Processors 232 and 238 may be a central processing unit (CPU), a reduced instruction set computing (RISC) processor, a complex instruction set computing (CISC) processor, a graphics processing unit (GPU), a digital signal processor (DSP) such as a baseband processor, an application-specific integrated circuit (ASIC), a field-programmable gate array (FPGA), a radio-frequency integrated circuit (RFIC), and the like.

Memory devices 240 may include a main memory, disk storage, or any combination thereof. Memory devices 240 may include but are not limited to, any type of volatile, nonvolatile, or semi-volatile memory such as dynamic random access memory (DRAM), static random access memory (SRAM), erasable programmable read-only memory (EPROM), electrically erasable programmable read-only memory (EE-PROM), flash memory, solid-state storage, and the like. Peripheral devices 248 also may be memory devices having similar features.

Communication resources 246 may include interconnection or network interface controllers, components, or other suitable devices to communicate with one or more peripheral devices 248 or database 110. Base station 102 may use radio component 200 for communicating over RF network 100 but communication resources 246 also may be used to interface with components within the network.

Instructions 236, 239, 242, and 250 may include software, a program, an application, an applet, an app, or other executable code for causing the respective processors to perform the functionality and operations disclosed herein. Instructions 236 may configure processor 234 to execute operations. Instructions 239 may configure processor 238 to execute operations in addition to the operations executed by processor 234. Instructions 236 and 239 may reside, completely or partially, within processors 234 and 238, respectively. These instructions also may reside in memory devices 240 as instructions 242 or in peripheral devices 248 as instructions 250. Instructions 242 and 250 may be transferred to processors 232.

It should be noted that first node 104, second node 106, and new node 108 may include the features disclosed above for base station 102. In some embodiments, nodes 104, 106, and 108 only include radio component 200. In other embodiments, the nodes may include radio component 200 along with some or all the features of computational component 201.

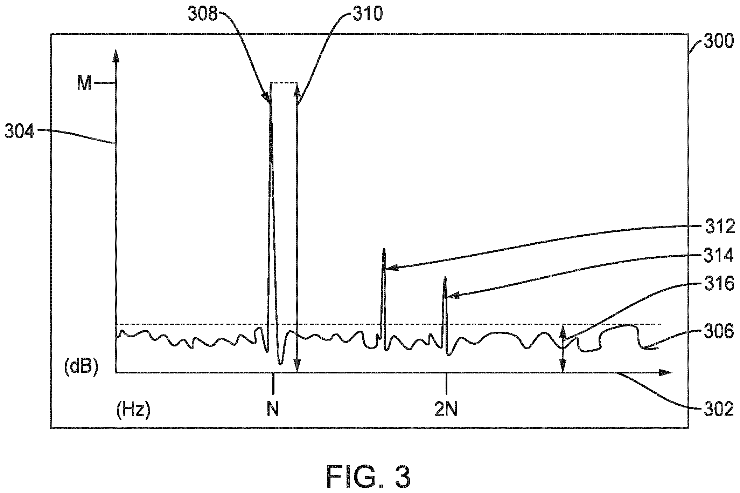

Figure 3 depicts a graph 300 of a received RF signal 306 showing elements according to the disclosed embodiments. As disclosed above, during the detection process of the disclosed embodiments, several sensing techniques may be used to determine elements or data points within a received RF signal from a node. These elements then may be used to generate a unique identifier for the node sending the RF signal. Figure 3 may show such a signal along with example elements that may be used in the unique identifier. Axis 302 may show frequency in Hertz (Hz) while axis 304 shows amplitude in decibels (dB).

Received RF signal 306 may be received and processed by receiver 206 of radio component 200. Receiver 206 may process signal 306, which is similar to RF signal 116 from new node 108 in Figure 1. Base station 102 may receive a request from new node 108 to join RF network 100. Alternatively, base station 102 may detect new node 108 trying to connect to RF network 100 and sends a test signal to obtain a response signal from new node 108, such as RF signal 116.

Computational component 201 may receive the processed signal, shown as received RF signal 306 in Figure 3. The disclosed embodiments, either in frequency chip set 230 or computational component 201, measure transmit frequency 308. Transmit frequency 308 also may be known as the fundamental frequency. The value for transmit frequency 308 may be N Hertz (Hz). Signal 306 at transmit frequency 308 may have an amplitude 310 of M decibels (dB).

Although signal 306 includes transmit frequency 308, it also includes additional data points or elements caused by the hardware components within transmitter 208 of new node 108. Further, physics also may cause unique elements based on transmit frequency 308. For example, spur 312 may be generated within signal 306 also having a frequency value along axis 302 and an amplitude value along axis 304. Spur 312 may be caused by something specific to transmitter 208 or by antenna 202 at new node 108.

Elements of signal 306 also may include harmonic 314. The frequency for harmonic 314 may be 2N. Harmonic 314 also may have an amplitude value in dB. Additional harmonics may be determined for signal 306 based on transmit frequency 308. For example, harmonics may be detected for frequency values of 3N and 4N. Another element may be noise floor 316 for link 114. Noise floor 316 may have a value determined by the sum of all noise sources and unwanted signals within link 114. Noise floor 316 may be raised and lowered by transmitter 208 of new node 108.

All of these elements of received RF signal 306 have data points, or values, that may be captured to provide a unique voice or fingerprint of new node 108. The hardware components specific to radio component 200 of new node 108 may generate the elements of received RF signal 306. The disclosed embodiments may use these unique values to generate a unique identifier for signal 306. The unique identifier may include the elements of signal 306, such as transmit frequency 308, amplitude 310, spur 312, one or more harmonics 314, and noise floor 316. Additional elements may be captured for signal 306. Further, the unique identifier may include values for the captured elements. For example, the unique identifier may include N Hz and M dB for transmit frequency 308. The other elements may include values for frequencies and amplitudes as well. Noise floor 316 may just include a value for the amplitude level that serves as the cutoff from noise to a signal element.

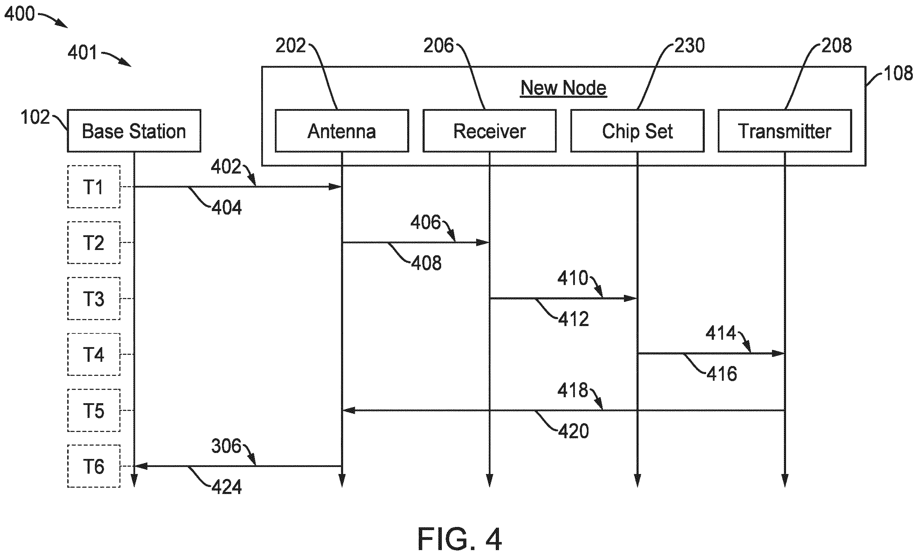

Figure 4 depicts a flow diagram 400 of a timing pattern 401 related to signal processing by new node 108 according to the disclosed embodiments. Base station 102 may send a signal 402 to new node 108 to determine its timing pattern. Some links and systems connected within RF network 100 can process messages and signals faster or slower depending upon software load and hardware components. The features of timing pattern 401 correspond to use of equipment, applications, and the like at new node 108 to respond to signal 402.

Signal 402 may be sent from base station 102 at time T1. A time delay 404 may occur between when signal 402 is transmitted from base station 102 to reception by antenna 202 of new node 108. Antenna 202 of radio component 200 passes received signal 406 to receiver 206 within new node 108 at time T2. This action also may incur a delay 408 before getting received signal 406 to receiver 206. Receiver 206 processes received signal 406 to generated processed or mixed signal 410 that is provided to frequency chip set 230 at time T3. The processing in receiver 206 also may cause a delay 412.

Frequency chip set 230 receives processed signal 410 and determines what action to take as a result. In this instance, frequency chip set 230 also may interact with other components on new node, such as processors 232. Frequency chip set 230 then generates signal 414 at time T4 and sends to transmitter 208. The actions by the chip set results in delay 416. Transmitter 208 processes signal 414 and provides transmission signal 418 to antenna 202 at time T5. This action results in delay 420. Antenna 202 transmits signal 306 from new node 108 to base station 102. The transmission of signal 306 may have a delay 424.

Thus, the reception of signal 402, processing operations, and transmission of signal 306 at new node 108 may invoke a timing pattern 401. In some embodiments, timing pattern 401 may include the total delay in responding to signal 402 from base station 102. In other embodiments, timing pattern 401 may include a subset of the delays. Other features within the timing pattern may be the transmission frequency of signal 306, disclosed above. Further, the delays disclosed herein also may include pauses caused by equipment or applications at new node 108. For example, receiver 206 may have a pause in processing signals so that it is captured in delay 412.

Base station 102, acting as network infrastructure, may capture or determine timing pattern 401 along with the unique identifier using the elements of signal 306. Signal 306, therefore, may exhibit two unique features based on new node 108. These features may differ from similar unique identifiers and timing patterns determined for first node 104 and second node 106. Further, new node 108 may provide identification or credentials along with signal 306.

Figure 5 depicts a block diagram showing access to database 110 for searching using sensed and received parameters 501 from a received signal 306 according to the disclosed embodiments. As disclosed above, a unique identifier 502 and a timing pattern 401 may be sensed and detected for signal 306 received from new node 108. Further, new node 108 may provide identification or credentials 504. Identification and credentials 504 may be information that new node 108 passes to RF network 100 to claim it is what it is. This information by itself may not be trusted. The combination with unique identifier 502 and timing pattern 401 as parameters 501, however, provides a better level of trust and confidence in determining whether to allow new node 108 onto RF network 100.

Unique identifier 502 includes the voice or fingerprint of signal 306, as disclosed above. Unique elements having data points comprise unique identifier 502. The determination of timing patter 401 also is disclosed above.

Database 110 is searched for unique identifier 502, timing pattern 401, and identification or credentials 504. Database 110 includes accepted nodes 506. Accepted nodes also may be known as bona fides as they have been allowed onto RF network 100. Parameters, however, sometimes change so that some information may not exactly match with the information for accepted nodes 506.

Accepted nodes 506 includes entries for nodes accepted on RF network 100. For example, first node entry 508 may correspond to a node, such as first node 102, which has been allowed onto RF network 100. First node entry 508 includes unique identifier 510A, timing pattern 512A, and identification or credentials 514A that are sensed, detected, or provided by the accepted node. Second node entry 516 corresponds to a different node, such as second node 104, also allowed onto RF network 100. Second node entry 516 includes unique identifier 510B, timing pattern 512B, and identification or credentials 514C. The values for unique identifier 510B, timing pattern 512B, and identification or credentials 514C are unique to the corresponding node for second node entry 516 and differ for these parameters for first node entry 508.

Database 110 may include multiple, or numerous, entries under accepted nodes 506 up to Nth node entry 518. Nth node entry 518 also includes a unique identifier, a timing pattern, and identification or credentials, but they are not shown in Figure 5 for brevity. Database 110 may search all entries within accepted nodes 506 using unique identifier 502 and timing pattern 401. If one of the accepted nodes include its own unique identifier and timing pattern that matches unique identifier 502 and timing pattern 401, then database 110 may check to see if identification or credentials 504 matches the identification or credentials for that entry. If so, then new node 108 corresponds to the node for that entry and is allowed onto RF network 100.

Situations may arise where some but not all parameters 501 match parameters for an entry. If the unique identifier was detected previously with the same timing pattern but with different identification or credentials, then it is possible that the same hardware or software for new node 108 has been reprogrammed for a different user identification or credentials. For example, using first node entry 508, unique identifier 502 and timing pattern 401 match unique identifier 510A and timing pattern 512A, respectively. Identification or credentials 504, however, does not match identification or credentials 514A for first node entry 508. The disclosed embodiments may accept new node 108 based upon network admittance criteria, which may allow matches of the sensed information to override any issue with identification or credentials. Database 110 may add a new entry to accepted nodes 506 or update first node entry 508 with the new information.

If the unique identifier was detected previously with a different timing pattern, regardless of identification or credentials, then new node 108 may be have been paired with a different backend system. The difference in the timing pattern may be a result of maintenance activity or an upgrade. For example, using second node entry 516, unique identifier 502 matches unique identifier 510B. Timing pattern 401, however, does not match timing pattern 512B. The disclosed embodiments may flag this situation as a notification or alert that new node 108 is experiencing anomalous activity. Second node entry 516 may be flagged by database 110 accordingly.

If the unique identifier has never been detected and the range has not added any new acceptable nodes, then new node 108 is an unwanted user and should be added to blacklist 520 for database 110. Blacklist 520 may be those nodes or entities that are not allowed onto RF network 100. Blacklist 520 also may include entries having unique identifiers, timing patterns, and identification or credentials and searchable like accepted nodes 506. These features of blacklist 520 are not shown for brevity. Thus, if unique identifier 502 does not match any unique identifiers within accepted nodes 506, then acceptance of new node 108 onto RF network 100 may be denied. In some instances, new node 108 may be added to blacklist 520.

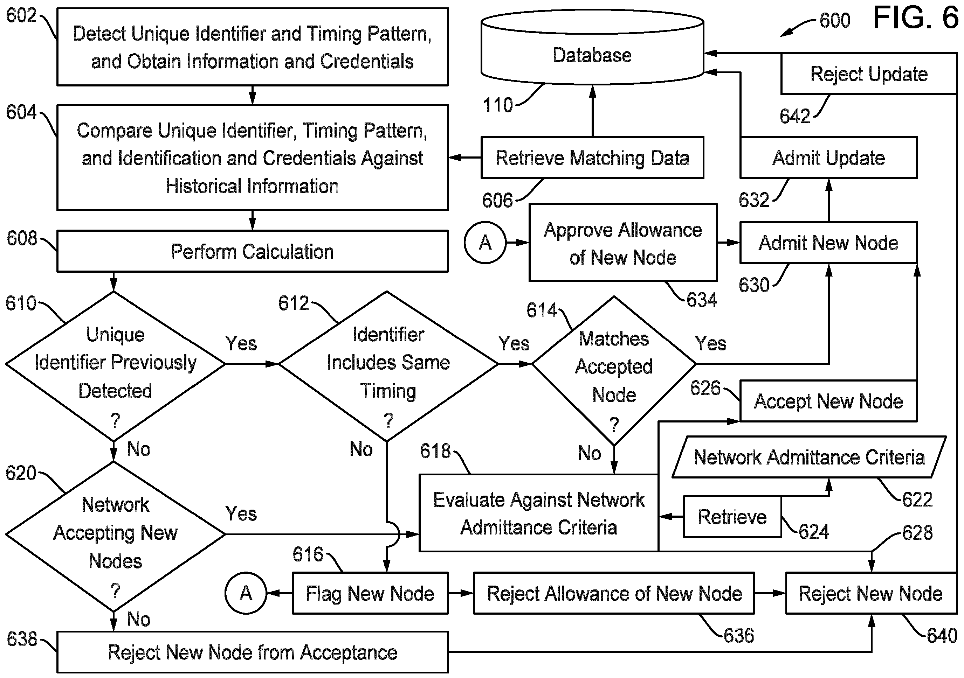

Figure 6 depicts a flowchart 600 for managing nodes within RF network 100 according to the disclosed embodiments. Flowchart 600 may refer to Figures 1-5 for illustrative purposes. Flowchart 600, however, is not limited to the embodiments disclosed by Figures 1-5.

Step 602 executes by detecting unique identifier 502 and timing pattern 401 for a received RF signal 306 from a new node 108 within RF network 100. These processes are disclosed above. Step 602 also obtains information and credentials 504 from new node 108. Step 604 executes by comparing unique identifier 502, timing pattern 401, and identification and credentials 504 against historical information in database 110.

Operation 606 executes by retrieving any matching data from entries for accepted or bona fide nodes for RF network 100. For example, database 110 may include a file for accepted nodes 506 that includes the unique identifier, the timing pattern, and the identification and credentials for nodes already allowed on RF network 100. Operation 606 compares parameters 501 for new node 108 to the entries within accepted nodes 506. The disclosed embodiments retrieve any data from one or more entries, if applicable. In some embodiments, parameters 501 for new node 108 do not match any entries or data within database 110.

Operation 608 executes by performing a calculation to assess whether to allow new node 108 onto RF network 100 and whether to take further action with regard to the treatment of the new node. Operation 608 proceeds to step 610 of flowchart 600, which executes by determining whether unique identifier 502 was detected previously. The disclosed embodiments may analyze any retrieved data from database 110 to determine whether unique identifier 502 matches a unique identifier for one or more entries for accepted nodes 506.

If step 610 is yes, then step 612 executes by determining whether the node entry matching unique identifier 502 also includes the same timing pattern, or timing pattern 401. If yes, then step 614 executes by determining whether identification and credentials 504 matches the identification and credentials for an accepted node corresponding to the node entry within database 110. If yes, then new node 108 has been accepted before and its information and credentials match an accepted entry within database 110. Thus, flowchart 600 proceeds to step 630. Step 630 executes by admitting new node 108 into RF network 100.

If step 612 is no, then timing pattern 410 associated with matched unique identifier 502 does not match the timing pattern with the matched unique identifier for the accepted node entry. Step 616 executes by flagging new node 108 as requiring a review for anomaly before admittance into RF network 100. New node 108 may be paired with a different backend system as a result of maintenance or an upgrade at the new node. In some embodiments, manual review may be performed. Depending on the result of the review, operation 634 or 636 is executed. If the review approves new node 108, then operation 634 executes by approving the allowance of the new node into RF network 100. Operation 634 proceeds to step 630. If the review rejects new node 108, then operation 636 executes by rejecting the allowance of the new node into RF network 100. Operation 636 proceeds to step 640, which executes by rejecting new node 108 from RF network 100.

If step 614 is no, then unique identifier 502 and timing pattern 401 matches the same data for a node entry stored in database 110 but identification and credentials 504 do not match. This condition may occur the hardware or software for new node 108 has been reprogrammed for a different identification. Step 618 executes by evaluating this condition against network admittance criteria 622. Operation 624 executes by retrieving network admittance criteria 622. The disclosed embodiments evaluate network admittance criteria 622 to either accept or rejection new node 108. For example, network admittance criteria 622 may allow new nodes on RF network 100 based on specified frequency ranges or other characteristics discernible from the sensed data and elements. In another example, RF network 100 may be accepting new nodes for a period of time due to some operational requirement.

If the criteria indicate to accept new node 108 based on unique identifier 502 and timing pattern 401, then operation 626 executes by accepting new node 108 into RF network 100. Operation 626 proceeds to step 630. If the criteria indicate to reject new node 622 based on unique identifier 502 and timing pattern 401, then operation 628 executes by rejecting new node 108 from RF network 100. Operation 628 proceeds to step 640.

If step 610 is no, then step 620 executes by determining whether RF network 100 is accepting new nodes. If yes, then flowchart 600 proceeds to step 618. New node 108 is evaluated against network admittance criteria 622, as disclosed above. If step 620 is no, then operation 638 executes by rejecting new node 108 from acceptance into RF network 100. Operation 638 proceeds to step 640.

After completion of steps 630 and 640, database 110 may be updated accordingly with the result of flowchart 600. Thus, for step 630, operation 632 executes by updating database 110 with the admittance of new node 108 and its information, such as parameters 501 of unique identifier 502, timing pattern 401, and information and credentials 504. An entry within accepted nodes 506 may be updated accordingly. For step 640, operation 642 executes by updating database 110 that new node 100 is not allowed onto RF network 100. Further, operation 642 may add new node 108 to blacklist 520.

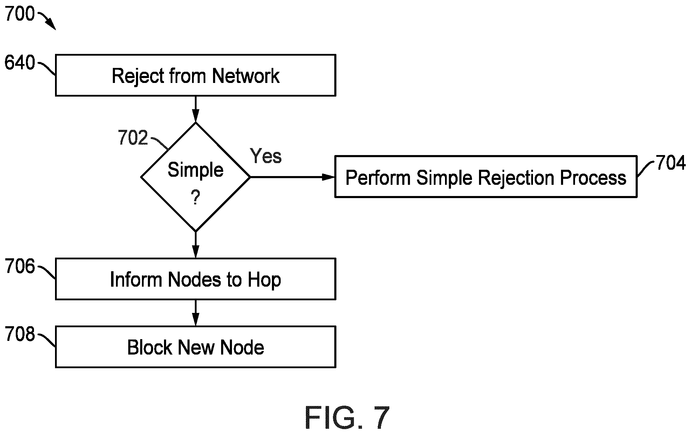

Figure 7 depicts a flowchart 700 for rejecting a new node 108 from RF network 100 according to the disclosed embodiments. Flowchart 700 may refer to Figures 1-6 for illustrative purposes. Flowchart 700, however, is not limited by the embodiments disclosed by Figures 1-6.

Step 640 executes by rejecting new node 108 from RF network 100, as disclosed above. In addition to operation 642, the disclosed embodiments may perform additional operations in dealing with a rejected node. Thus, step 702 executes by determining whether the rejection of new node 108 is a simple rejection or a persistent rejection. A persistent rejection may be one where base station 102, as the network infrastructure, determines that information or parameters from the new node (unique identifier 502, timing pattern 401, or identification and credentials 504) have been detected and rejected repeatedly. Alternatively, the parameters or information for the new node corresponds to an entry in blacklist 520.

The disclosed embodiments may set a threshold, such as 10 attempts. If the number of attempts to join RF network 100 exceeds this threshold then the rejections are persistent. Further action should be taken with persistently rejected nodes. Step 702 determines whether the rejection noted in step 640 is simple or persistent. If simple, then step 704 executes by performing a simple rejection process. The network management infrastructure, such as base station 102, does not add new node 108, updates database 110, and informs the new node that it is not authorized to communicate within RF network 100.

If step 702 is no, then a persistent rejection condition exists. Step 706 executes by informing nodes within RF network 100 to hop to a new frequency so as to disassociate from all possible accidental jamming or congestion caused by the unwanted node. Step 708 executes by blocking persistently rejected new node 108 by all accepted nodes within RF system 100. New node 108 is blocked from joining any ad-hoc networks. For example, first node 104 and second node 106 also blocks new node 108 from communication or being to an ad-hoc network by new node 108.

As will be appreciated by one skilled in the art, the present invention may be embodied as a system, method or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, the present invention may take the form of a computer program product embodied in any tangible medium of expression having computer-usable program code embodied in the medium.

The corresponding structures, material, acts, and equivalents of all means or steps plus function elements in the claims below are intended to include any structure, material or act for performing the function in combination with other claimed elements are specifically claimed. The description of the present invention has been presented for purposes of illustration and description, but is not intended to be exhaustive or limited to the invention in the form disclosed. Many modifications and variations will be apparent to those of ordinary skill without departing from the scope and spirit of the invention. The embodiment was chosen and described in order to best explain the principles of the invention and the practical application, and to enable others of ordinary skill in the art to understand the invention for embodiments with various modifications as are suited to the particular use contemplated.

## Claims

1. A method for determining whether to add a new node to a radio frequency (RF) network, the method comprising:
detecting the new node on the RF network, wherein the new node transmits over a radio frequency;
measuring data points of a signal from the new node over a link corresponding to the radio frequency to a network infrastructure;
determining a unique identifier for the new node based on the measured data points;
determining a timing pattern for the new node on the link, wherein the timing pattern is based on received information from a device at the new node;
searching a database of node credentials for the unique identifier and the timing pattern, wherein the database is connected to the RF network; and
determining whether to allow the new node on the RF network according to a result of searching the unique identifier in the database.

2. The method of claim 1, further comprising
receiving an identification or a credential for the new node at the RF network; and
matching the unique identifier, such as a fingerprint, with the identification or the credential.

3. The method of claim 2, further comprising checking the database for the identification or the credential to determine whether to accept the new node.

4. The method of claim 1, 2 or 3, wherein determining whether to allow the new node includes not allowing the new node if the unique identifier, such as a fingerprint, does not match an entry in the database.

5. The method of claim 2, 3 or 4, wherein determining whether to allow the new node includes not allowing the new node if the identification or the credential for the unique identifier, such as the fingerprint, does not match an allowed identification or an allowed credential of the unique identifier, such as the fingerprint, in the database.

6. The method of claim 1, 2 or 3, wherein determining whether to allow the new node includes allowing the new node if the unique identifier, such as a fingerprint, is within the database.

7. The method of any of claims 1 to 5, wherein determining whether to allow the new node includes not allowing the new node based on the unique identifier, such as a fingerprint.

8. The method of claim 7, further comprising instructing at least one node connected to the RF network to reconnect to the RF network at a new frequency, and/or blocking the new node from the RF network by not adding the unique identifier of the new node to the database.

9. The method of any preceding claim, wherein the data points of the signal include at least one of a transmission frequency, a spur within the signal, a harmonic component within the signal, and a noise floor for the signal, and/or wherein the timing pattern includes at least one of a transmission speed, a transmission frequency, and a variability of transmission, and optionally, wherein the variability of transmission is caused by the device at the new node.

10. A method for managing nodes connected to a radio frequency (RF) network, the method comprising:
detecting a new node on the RF network, wherein the new node transmits over a radio frequency within the RF network;
measuring elements of a signal from the new node over the link;
determining a unique identifier for the new node based on the measured elements;
determining a timing pattern for the new node on the link, wherein the timing pattern is based on received information from the new node;
receiving an identification for the new node over the link;
searching a database of node credentials for the unique identifier and the timing pattern, wherein the database is connected to the RF network;
determining whether the unique identifier and the timing pattern matches an entry for a node within the database;
comparing the identification to the entry for the node matching the unique identifier and the timing pattern; and
determining whether to allow the new node onto the RF network based on the comparison.

11. The method of claim 10, wherein determining whether to allow the new node includes not allowing the new node if the identification does not match the entry for the node matching the unique identifier, such as a fingerprint.

12. The method of claim 10 or 11, wherein the elements of the signal include at least one of a transmission frequency, a spur within the signal, a harmonic component within the signal, and a noise floor for the signal, and/or wherein the timing pattern includes at least one of a transmission speed, a transmission frequency, and a variability of transmission.

13. The method of claim 10, 11 or 12, wherein determining whether to allow the new node includes not allowing the new node based on the unique identifier, such as a fingerprint, and optionally, further comprising instructing at least one node connected to the RF network to reconnect to the RF network at a new frequency.

14. A radio frequency (RF) network comprising:
a plurality of nodes transmitting signals within the network;
a network infrastructure connected to the plurality of nodes, wherein the network infrastructure includes at least one processor connected to a memory storing instructions thereon; and
a database to store identifications for the plurality of nodes,
wherein the instructions stored within the memory are executed on the at least one processor to configure the network infrastructure to
detect a new node on the RF network, wherein the new node transmits over a radio frequency within the RF network;
measure elements of a signal from the new node over a link corresponding to the radio frequency;
determine a unique identifier for the new node based on the measured elements;
determine a timing pattern for the new node on the link, wherein the timing pattern is based on received information from the new node;
search the database for the unique identifier and the timing pattern; and
determine whether to allow the new node on the RF network according to a result of searching the unique identifier and the timing pattern in the database.

15. The RF network of claim 14, wherein the instructions configure the network infrastructure to
receive an identification for the new node at the RF network;
match the unique identifier with the identification or the credential; and
check the database for the identification to determine whether to accept the new node.
